# FASCICULE DE BREVET EUROPEEN

(11) **EP 3 622 846 B1**
(45) Date de publication et mention de la délivrance du brevet: **18.06.2025**
(21) Numéro de dépôt: 18194458.8
(22) Date de dépôt: 14.09.2018
(51) Int. Cl.: A44C 27/00, G04B 45/00, B21D 53/44, A44C 9/00, A44C 5/02, B44C 5/04, G04B 19/28, B44C 1/26

(54) **PROCEDE D'ASSEMBLAGE D'AU MOINS DEUX ELEMENTS**
VERFAHREN ZUM ZUSAMMENBAU VON MINDESTENS ZWEI ELEMENTEN
METHOD FOR ASSEMBLING AT LEAST TWO ELEMENTS

(43) Date de publication de la demande: 18.03.2020
(73) Titulaire: Comadur S.A., 2400 Le Locle (CH)
(72) Inventeur: Netuschill, Alexandre, 2517 Diesse (CH)
(74) Mandataire: ICB SA

(56) Documents cités:
- EP-A1- 2 796 297
- WO-A1-2014/096260
- DE-A1- 19 623 806
- US-A1- 2009 038 339

## Description

La présente invention concerne un procédé d'assemblage d'au moins deux éléments pour former un composant d'habillage notamment en céramique pour un dispositif portable, ainsi qu'un tel composant d'habillage obtenu par ce procédé. Chaque élément est constitué d'un matériau aux caractéristiques physiques et/ou esthétiques distinctes.

### Domaine technique

L'invention trouvera une application dans la fabrication par assemblage d'un composant d'habillage destiné, préférentiellement mais non limitativement, au domaine de l'horlogerie. Préférentiellement, un tel composant peut être par exemple une lunette de montre destinée à être rapportée sur une boite de montre, un maillon de bracelet, un cadran, une boite de montre, un élément de fermoir.
L'invention trouvera aussi une application dans la fabrication de composants d'habillage utilisés dans les domaines, de façon non exhaustive, de la téléphonie mobile et cellulaire, des terminaux informatiques notamment portables, par exemple pour former des coques de téléphone portable ou de tablettes, ou encore dans le domaine de la joaillerie ou bien de l'art de la table.

L'invention vise notamment l'assemblage d'éléments constitués en des matériaux durs, à savoir résistants aux chocs et aux rayures. Ces matériaux durs peuvent être notamment de types céramiques techniques. En outre, chaque élément peut être constitué en dioxyde de zirconium ou « zircone », en dioxyde d'aluminium ou « alumine », en encore en un matériau composite intégrant un support en céramiques et une matrice métallique ou « cermet ». Chaque élément du composant d'habillage de l'invention peut aussi être constitué en saphir ou rubis synthétique.

### Arrière-plan technologique

Pour des raisons esthétiques, il est parfois souhaité de réaliser des composants d'habillage, notamment des composants d'habillage horloger présentant des aspects différents selon la région du composant. A titre d'exemple il est bien connu de réaliser des lunettes de montre en céramique bicolore, présentant deux zones ayant des couleurs différentes.

Une technique connue consiste à faire subir au composant réalisé en un premier matériau des traitements de surface successifs par exemple par application de peinture ou de couches métalliques d'aspects différents selon des technologies de dépôt chimique ou physique en phase vapeur (CVD ou PVD), en masquant partiellement la ou les zones du composant dont on ne souhaite pas modifier l'aspect. L'inconvénient principal de ces traitements réside dans le fait que lorsqu'une surface traitée du composant vient en contact avec un corps étranger de dureté supérieure à celle de la couche déposée, elle risque de se rayer et de laisser apparaître le premier matériau ce qui n'est pas acceptable pour des produits dont l'aspect esthétique est primordiale pour le consommateur.

Lorsque le composant d'habillage est réalisé en une céramique technique, il est connu de réaliser des composants bicolores directement par injection, notamment par « bi-injection » de deux matériaux céramiques de couleurs différentes, et frittage. Toutefois, cette technique de fabrication est complexe à mettre en œuvre en vue d'obtenir une démarcation nette entre les deux matériaux est délicate à obtenir. En effet il est difficile d'adapter les paramètres de frittage pour que d'une part les couleurs soient dans leur configuration optimale, et d'autre part éviter les phénomènes de diffusion d'une couleur dans l'autre qui nuisent à l'obtention d'une démarcation nette entre les parties du composant de couleurs différentes.

Dans un cadre purement esthétique, il est possible de colorer par imprégnation un composant constitué d'un seul élément, permettant d'obtenir des coloris différents sur certaines zones dudit composant.

Toutefois, les couleurs sont limitées par le coloris du matériau constituant le composant et aux techniques d'imprégnation. De surcroît, encore une fois, l'étape de cuisson induit une adaptation des paramètres ne permet pas d'obtenir un résultat optimal.

Une autre approche connue pour réaliser des composants bicolores consiste à assembler des éléments de couleurs différentes entre eux par encollage de portions aboutées des éléments. Toutefois les composants obtenus par cette technique sont inéluctablement plus fragiles que les composants d'un seul tenant. De plus, selon les dimensions des éléments à assembler les opérations de collage peuvent être délicates et fastidieuses

On connait également du document DE 19623 806 un procédé de fabrication de carreaux en céramique décorées.

On connait également du document US2009/038339 une bague composée de deux anneaux extérieurs en matériau dur assemblés par un anneau de liaison en un matériau « mou ».

Enfin on connait également du document EP 2796 297 une pièce en céramique dans laquelle est sertie une pierre au moyen d'un matériau métallique au moins partiellement amorphe disposé dans une creusure de la pièce, la pierre étant sertie dans le matériau au moins partiellement amorphe. Ce document décrit le préambule des revendications 1 et 2.

### Résumé de l'invention

L'invention a pour but de remédier aux inconvénients de l'art antérieur susmentionné fournir un composant d'habillage, notamment un composant d'habillage horloger présentant des aspects différents selon la région du composant qui soit simple et économique à réaliser.

L'invention a également pour but de fournir un composant d'habillage notamment un composant bicolore dans lequel la démarcation entre les parties du composant de couleurs différentes est nette.

A cet effet l'invention concerne un procédé d'assemblage d'au moins un premier élément et d'un deuxième élément pour former lorsqu'ils sont assemblés un composant d'habillage pour un dispositif portable conformément à la revendication 1 du brevet. L'invention concerne également un procédé d'assemblage d'au moins un premier élément et d'un deuxième élément pour former lorsqu'ils sont assemblés un composant d'habillage pour un dispositif portable conformément à la revendication 2 du brevet.

L'invention procède donc de l'idée générale inventive qui consiste à assembler au moins deux éléments, de natures et/ou couleurs distinctes, préalablement fabriqués individuellement, en vue d'obtenir pour chaque élément une configuration optimale, autant mécanique qu'esthétique.

Selon un premier mode de réalisation, l'étape d'introduction à blocage du troisième élément dans les première et deuxième gorges consiste en un remplissage des première et deuxième gorges par incrustation d'un matériau métallique au moins partiellement amorphe.

En effet, la viscosité d'un matériau amorphe chute fortement à des températures peu élevées, ce qui permet leur mise en forme sous faible contrainte. Plus particulièrement, un métal amorphe est mis en forme entre sa température de transition vitreuse et sa température de cristallisation. Par exemple, pour un métal amorphe à base de platine, l'incrustation se fait aux alentours de 300°C (degré Celsius) pour une viscosité atteignant 103 Pa.s (Pascal-secondes) pour une contrainte de 1 MPa (MégaPascal), au lieu d'une viscosité de1012 Pa.s-1 à la température de transition vitreuse. Cette viscosité permet d'obtenir de meilleures caractéristiques d'accroche. La faible viscosité des métaux amorphes à cette plage de température leur permet, en premier lieu, de parfaitement remplir l'espace dans lequel ils sont contraints, et ce, sous faibles pressions. Ainsi, dans le cas du remplissage d'une gorge, cette faculté de parfaitement épouser les contours permet de remplir fidèlement les creusures.

La mise en forme sous une faible température autorise désormais l'utilisation de matériaux non utilisés avant du fait de leur mauvaise résistance thermique (comme la chute des propriétés mécaniques, l'oxydation ou encore un point de fusion bas) ou bien de leur mauvaise résistance aux chocs thermiques.

Le recours à une incrustation en matériau métallique au moins partiellement amorphe permet une mise en forme sous faibles contraintes et sous faibles températures, par exemple à l'aide d'une presse à chaud.

L'incrustation métallique peut être réalisée sur une face visible ou non du composant d'habillage, sur des portions de jonction s'étendant au moins de part et d'autre des surfaces de contact desdits éléments aboutés entre eux. Une telle incrustation métallique s'effectue à l'intérieur d'au moins une gorge, notamment sous forme d'au moins une creusure réalisée le long de chaque portion de jonction des éléments entre eux.

Selon un mode de réalisation alternatif, les premier et deuxième éléments sont réalisés en un matériau conducteur de l'électricité ou dans lequel les parois des gorges sont revêtues d'une couche conductrice de l'électricité, caractérisé en ce que l'étape d'introduction à blocage du troisième élément dans les première et deuxième gorges consiste en remplissage des première et deuxième gorges d'un métal par un procédé d'électroformage.

Conformément à l'invention :
- le matériau du premier élément est différent du matériau du deuxième élément.
- le premier élément présente un premier aspect et le deuxième élément présente un deuxième aspect différent de celui du premier élément.
- la première gorge est en communication avec la deuxième gorge lorsque les deux éléments sont aboutés.
- après l'étape d) il est prévu une étape consistant à araser ledit troisième élément jusqu'à ce que les surfaces des premier, deuxième et troisième éléments soient reliées l'une à l'autre sans solution de continuité.
- ledit premier matériau et ledit deuxième matériau sont des matériaux en céramique polycristalline ou monocristalline, à base d'oxyde d'aluminium, d'oxyde de zirconium, de carbure de tungstène, de nitrure de silicium, de carbure de silicium, de carbure de tungstène ou des cermets.
- le matériau formant le troisième élément est choisi parmi l'ensemble : métaux précieux ou semi-précieux.
- le matériau formant le troisième élément est choisi parmi l'ensemble comprenant des alliages d'or, de platine ou de palladium.
- chaque gorge présente une section transversale trapézoïdale, les parois latérales de chaque gorge étant inclinées et convergentes depuis l'intérieur vers l'extérieur.
- chaque gorge est usinée soit en face supérieure, soit en face inférieure desdits premier élément et deuxième élément.
- chaque gorge s'étend sur toute la longueur du premier élément et deuxième élément.
- chaque gorge comporte une profondeur comprise entre 0.05 mm et 4 mm.
- ledit composant d'habillage sur un dispositif portable d'horlogerie, telle une montre.

L'invention concerne également un composant d'habillage obtenu par la mise en œuvre d'un tel procédé d'assemblage.

L'invention concerne aussi un composant d'habillage définit par la revendication 14 du brevet.

Selon un premier mode de réalisation avantageux du composant d'habillage de l'invention, ledit troisième élément est un matériau métallique au moins partiellement amorphe incrusté dans lesdites première et deuxième gorges

Selon un second mode de réalisation du composant d'habillage de l'invention, ledit troisième élément est un matériau métallique électro-formé dans lesdites première et deuxième gorges.

De manière avantageuse, le composant d'habillage forme une lunette de montre, un maillon de bracelet, un cadran, une boite de montre, ou élément de fermoir. Ce composant peut donc présenter une forme annulaire dans lequel chaque élément est constitué d'une portion d'arc annulaire, notamment pour constituer une lunette de montre.

### Brève description des figures

L'invention sera décrite ci-après de manière plus détaillée à l'aide des dessins annexés, donnés à titre d'exemples nullement limitatifs, représentant différentes étapes d'assemblage de plusieurs éléments en vue d'obtenir un composant d'habillage, dans lesquels :
- la figure 1 représente schématiquement une vue en élévation de deux éléments séparés, de forme semi-annulaire, mettant en évidence des matériaux différents ;
- la figure 2 représente schématiquement une vue en élévation des deux éléments accolés avant d'être fixés entre eux ;
- la figure 3 représente schématiquement une vue selon une coupe verticale d'une des éléments de la figure 2, montrant une gorge ménagée au sein d'un des éléments ;
- la figure 4 représente schématiquement une vue en élévation des deux éléments, après incrustation métallique ;
- la figure 5 représente schématiquement une vue selon une coupe verticale d'un des éléments de la figure 4, montrant l'incrustation métallique en surépaisseur ;
- la figure 6 représente schématiquement une vue en élévation d'un composant annulaire d'habillage obtenu, après suppression de la surépaisseur de l'incrustation métallique ;
- la figure 7 représente schématiquement une vue selon une coupe verticale du composant de la figure 6 ;
- la figure 8 représente schématiquement une vue en perspective et d'un composant d'habillage, de type coque de protection d'un téléphone cellulaire, constitué de trois éléments séparés ; ce mode de réalisation n'est pas couvert par la présente invention ;
- la figure 9 représente schématiquement une vue en coupe d'un des trois éléments, montrant des gorges ménagées en face inférieure ; ce mode de réalisation n'est pas couvert par la présente invention ; et
- la figure 10 représente schématiquement une vue de dessous du composant d'habillage, une fois les trois éléments assemblés, mettant en évidence un exemple de réalisation des formes et des longueurs des différentes gorges, conférant un aspect esthétique à cette incrustation métallique. ce mode de réalisation n'est pas couvert par la présente invention.

Lesdites figures montrent un exemple de certaines étapes de mise en œuvre de l'assemblage selon l'invention pour l'obtention d'un composant d'habillage, d'une part, de forme annulaire aplatie, à partir de deux éléments semi-annulaires, susceptible de constituer une bague destinée à être apposée sur un dispositif portable d'horlogerie. D'autre part, les figures montrent un exemple de réalisation, non couvert par la présente invention, d'une coque de téléphone cellulaire, à partir de trois éléments.

Plus largement, l'invention permet d'obtenir un composant d'habillage à partir de davantage d'éléments, assemblés entre eux par incrustation métallique. Le composant obtenu peut présenter toute forme, annulaire circulaire, ovoïdale ou polygonale, et les éléments assemblés présentent des formes complémentaires dont l'agencement permet d'obtenir ladite forme globale du composant d'habillage. Dans un mode de réalisation non couvert par l'invention, un tel composant peut présenter une section polygonale, parallélépipédique, tronconique ou plus complexe, ou encore présenter à bords latéraux convexes ou concaves.

### Description détaillée de l'invention

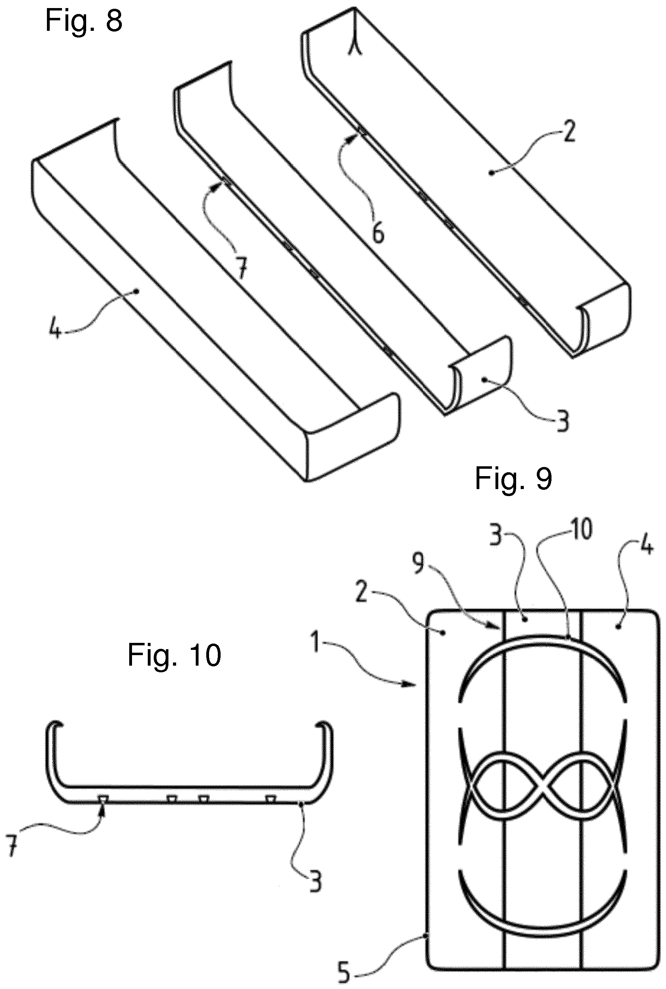

La présente invention concerne un procédé de fabrication d'un composant 1 d'habillage par assemblage de plusieurs éléments, au moins un premier élément 2 et un deuxième élément 3. Un tel assemblage pour obtenir un tel composant 1 peut s'effectuer avec davantage d'éléments, comme un troisième élément 4, comme visible sur l'exemple représenté sur les figures 8, 9 et 10.

Comme évoqué précédemment, l'invention envisage d'obtenir un assemblage à partir d'éléments 2, 3, 4 en conservant les propriétés esthétiques et/ou physiques de chacun sont optimales. Pour ce faire, dans un premier temps, on fabrique le premier élément 2. On fabrique aussi le deuxième élément 3. Éventuellement, on fabrique un autre élément 4, ainsi que tout autre élément supplémentaire.

Avantageusement, si le premier élément 2 et le deuxième élément 3 présentent une forme identique, ils peuvent être successivement fabriqués dans un même moule, avec des matériaux et/ou des traitements différents.

Selon une autre fabrication, plusieurs éléments 2, 3, 4 peuvent être réalisés en même temps en une seule pièce au sein d'un même moule, avec des matériaux et/ou des traitements différents. La pièce créée est ensuite séparée, notamment au travers d'une opération de découpe, en autant d'éléments 2, 3, 4, conformés par être ensuite assemblés pour former ledit composant 1.

Le matériau du premier élément 2 est différent du matériau du deuxième élément 3. Dans le cas d'autres éléments 4, son matériau peut être différent des deux autres éléments 2, 3, ou bien seulement différent du matériau de l'élément 2, 3 destiné à être assemblé avec lui (i.e. l'autre élément 3 peut avoir un matériau identique à un élément 2, 3 qui ne le jouxte pas).

La différence de matériau s'entend au niveau structurel, tout aussi bien qu'esthétique. En effet, une même base de matériau peut avoir un aspect différent, tout en conservant des caractéristiques propres quasiment identiques. Dès lors, l'aspect du matériau du premier élément 2 peut être différent de celui du matériau du deuxième élément 3, ou des autres éléments 4.

Préférentiellement, ledit premier matériau et ledit deuxième matériau sont des matériaux en céramique polycristalline ou monocristalline, à base d'oxyde d'aluminium, d'oxyde de zirconium, de carbure de tungstène, de nitrure de silicium, de carbure de silicium, de carbure de tungstène ou des cermets.

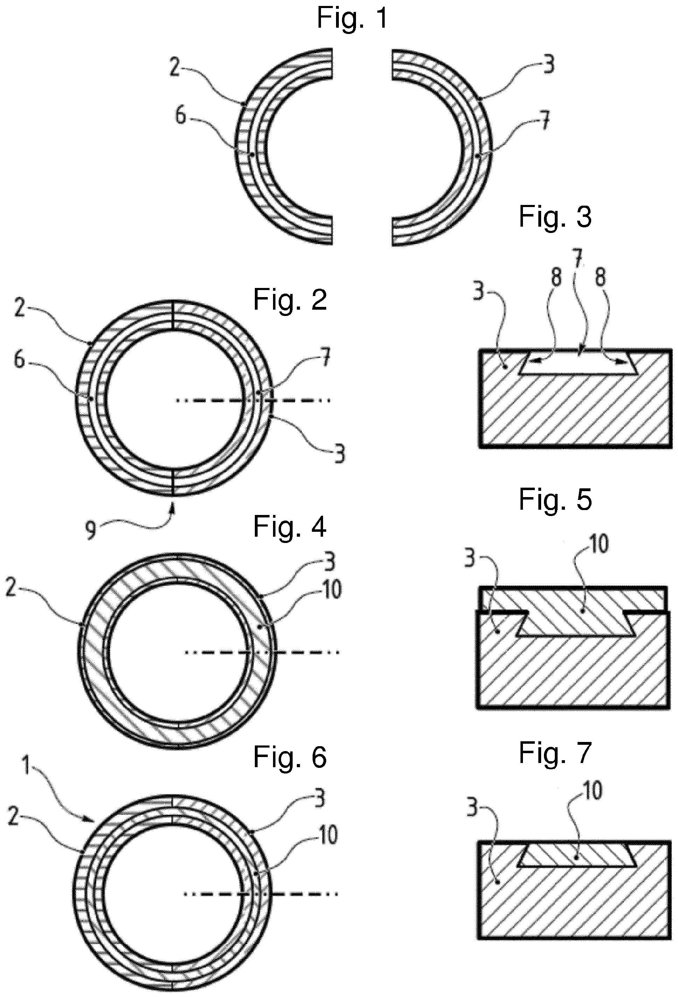

La forme des éléments 2, 3, 4 correspond à une partie de la forme globale du composant 1 à fabriquer. Dans l'exemple de réalisation visible sur les figures 1 à 7, les premier et deuxième éléments 2,3 présentent une forme d'arc annulaire, de sorte qu'une fois assemblés le composant 1 présente une forme circulaire ou annulaire.

Selon un autre mode de réalisation, représenté sur les figures 8 à 10 ne faisant pas partie de l'invention revendiquée, le composant 1 est une coque 5 pour dispositif portable de type téléphone cellulaire, globalement parallélépipédique rectangle, notamment avec des arêtes arrondies. Ce composant 1 de coque 5 est constitué de trois éléments 2, 3, 4, sous forme de bandes rectangulaires surmontées à leurs extrémités longitudinales de bords, dont l'assemblage permet d'obtenir la forme globale dudit composant 1.

D'autres formes peuvent être envisagées, non couvertes par l'invention, comme un composant 1 polygonal dont chacun des éléments 2, 3, 4 représentent alors un ou plusieurs de ses côtés. En somme, les formes des éléments 2, 3, 4 sont complémentaires pour obtenir la forme d'une seule pièce assemblée du composant 1 d'habillage.

Pour ce faire, l'invention prévoit de ménager au moins une première gorge 6 dans le premier élément 2 et au moins une deuxième gorge 7 dans le deuxième élément 3. Au moins autant de gorges 6, 7 que d'éléments 2, 3, 4 sont réalisées. Un même élément 2, 3, 4 peut comprendre plusieurs gorges 6, 7, comme sur l'exemple des figures 9 et 10 où un même élément 2, 3, 4 présente quatre gorges 6, 7. En outre, les gorges 6, 7 d'un même élément 2, 3, 4 peuvent coïncider, se recouper ou partager une portion de leur longueur, comme visible sur l'exemple de la figure 10.

L'usinage des gorges 6, 7 peut être réalisé mécaniquement, au moyen d'un outil prévu à cet effet, par abrasion ou découpe laser, ou toute autre technique adaptée.

Préférentiellement, chaque gorge 6, 7 est usinée de manière à présenter une section transversale trapézoïdale, les parois latérales de chaque gorge étant inclinées et convergentes depuis l'intérieur, c'est-à-dire depuis le fond de la gorge, vers l'extérieur. De manière avantageuse, chaque gorge 6, 7 présente une largeur plus importante que sa profondeur.

En outre, chaque gorge 6, 7 peut comporter une profondeur comprise entre 0.05 mm et 4 mm. En outre, afin de ne pas fragiliser le composant 1, la profondeur de chaque gorge 6,7 ne peut excéder 90% de l'épaisseur de chaque élément 2, 3, 4.

On notera qu'en fonction de l'usinage réalisé, une gorge 6,7 peut présenter une profondeur et une largeur variable sur sa longueur. En particulier, comme visible sur l'exemple de la figure 10, les extrémités des gorges 6,7 peuvent présenter une largeur moindre qu'aux niveaux des zones de jonction 9 entre les éléments 2, 3, 4, où les gorges 6, 7 présentent une largeur plus importante.

Chaque gorge 6, 7 peut présenter des flancs ou parois latérales 8 inclinées et convergente depuis l'intérieur vers l'extérieur. En d'autres termes, les parois latérales 8 présentent un angle négatif, qui permettra de retenir le matériau d'assemblage. En somme, chaque gorge 6, 7 présente une forme tronconique, ouverte au niveau d'une des faces des éléments 2, 3, 4.

A ce titre, les gorges 6, 7 peuvent être usinées soit en face supérieure, soit en face inférieure desdits premier élément 2 et deuxième élément 3, ainsi que de tout autre élément 4. En somme, elles peuvent être réalisées par le dessus ou par le dessous, de sorte qu'elles soient visibles ou non en fonction de la façon dont le composant 1 sert d'habillage. Le matériau de remplissage peut donc servir d'élément décoratif dans le cas ou les gorges sont réalisées sur une face apparente du composant une fois qu'il est monté par exemple sur une boite de montre. Dans le cas d'une lunette il est par exemple possible d'envisager que les gorges présentent des bords qui délimitent des éléments figuratifs et/ou décoratifs tels qu'un chiffre, une lettre ou tout autre motif.

De plus, chaque gorge 6, 7 peut s'étendre sur toute la longueur des premiers éléments 2 et deuxième élément 3, ainsi que de tout autre élément 4. C'est le cas de l'exemple de réalisation des figures 1 à 7, où les gorges 6, 7 sont ménagées au centre et le long de chaque premier 2 et deuxième élément 3, de manière à conférer une meilleure continuité du matériau d'assemblage qui y sera introduit.

Selon l'exemple de réalisation visible sur les figures 8 à 10, les gorges 6,7 s'étendent sur une partie de la surface des éléments 2, 3, 4.

En tout état de cause, une première gorge 6 d'un premier élément 2 est en communication avec la deuxième gorge 7 d'un deuxième élément 3 lorsque les deux éléments 2, 3 sont aboutés. En somme, les gorges 6, 7 sont réalisées de sorte qu'au moins une de leurs extrémités respectives coïncide avec un bord de jonction entre leurs éléments 2, 3, 4, offrant une continuité des gorges 6,7 entre les éléments 2, 3, 4.

Au cours de l'assemblage selon l'invention, le premier élément 2 et le deuxième élément 3 sont aboutés. Ils sont donc positionnés en vis-à-vis, selon un certain alignement, afin d'obtenir la configuration de la forme souhaitée du composant 1.

Un tel aboutement des éléments 2, 3, 4 s'effectue au niveau d'un de leurs bords de jonction respectifs. Leurs chants respectifs viennent alors être accolés, mis en contact, sans jeu. Dès lors, au moment de la fabrication des éléments 2, 3, 4, peut intervenir une étape d'ajustement par usinage des bords de jonction desdits éléments 2, 3, 4, afin d'obtenir des lignes de contact parfait entre eux, au moins aux niveaux des zones de jonction 9.

En outre, les éléments 2, 3, 4 peuvent être temporairement verrouillés ou solidarisés ensemble dans ladite configuration, notamment sur un support prévu à cet effet, par tout moyen approprié, notamment mécanique, par collage provisoire etc..

L'assemblage selon l'invention consiste à maintenir au moyen d'au moins un troisième élément de liaison 10 que l'on introduit à blocage dans les premières 6 et deuxièmes gorges 7. En somme, les gorges 6, 7 sont remplies d'un troisième élément 10, qui assure l'assemblage solidaire entre les éléments 2, 3, 4 en formant une liaison mécanique continue au moins aux niveaux des zones de jonction 9.

Comme précédemment évoqué, avec des gorges présentant une section à parois latérales inclinées convergentes vers l'ouverture de chaque gorge 6, 7, l'introduction du troisième élément 10 forme alors une liaison mécanique de type queue d'aronde qui retient le troisième élément dans la gorge.

Le troisième élément 10 comprend un matériau différent des autres matériaux des éléments 2, 3, 4, de par sa constitution et son aspect. En particulier, le troisième élément 10 comprend selon un premier mode de réalisation, un matériau métallique au moins partiellement amorphe, à savoir un alliage métallique amorphe ou partiellement amorphe présentant des caractéristiques de malléabilité pouvant être pressé à chaud pour changer de forme sans qu'il se fissure ni se brise et pénétrer par incrustation dans les gorges 6, 7. Une telle incrustation permet de remplir totalement le volume intérieur de chaque gorge 6,7, notamment par déformation du troisième matériau 10, prévu en partie amorphe.

Typiquement, de façon non exhaustive, des tels alliages métalliques amorphes que l'on peut mettre en œuvre selon le procédé de l'invention peuvent être des alliages de zirconium, par exemple avec les compositions chimiques en pourcentage atomique suivantes : Zr67.5Ti8.65Ni9.65Cu10.44Be3.76. Avantageusement, ledit matériau formant le troisième élément 10 est choisi parmi l'ensemble : métaux précieux ou semi-précieux. Plus précisément, ledit matériau formant le troisième élément 10 peut être choisi parmi l'ensemble comprenant des alliages d'or, de platine ou de palladium. Par exemple, de façon non exhaustive, des tels alliages métalliques amorphes précieux que l'on peut mettre œuvre peuvent avoir des compositions chimiques en pourcentage atomique, pour platine « Pt852 » Pt57.5Cu14.7Ni5.3P22.5, de l'or « Au 18K », du palladium « Pd600 » Pd43Cu27Ni10P20 ou encore du palladium « Pd900 » Pd77.5Cu6Si16.5.

Avantageusement, ledit matériau formant le troisième élément 10 est de type cristallin. Un tel matériau peut être métallique, comme par exemple de l'aluminium ou un alliage comprenant de l'aluminium. Le troisième élément 10 constitué d'aluminium peut aisément être incrusté à chaud.

Selon un second mode de réalisation du procédé d'assemblage de l'invention, les premier et deuxième éléments 2,3 sont réalisés en un matériau conducteur de l'électricité ou dans lequel les parois des gorges 6, 7 sont revêtues d'une couche conductrice de l'électricité. Ainsi, l'étape d'introduction à blocage du troisième élément 10 dans les première 6 et deuxième gorges 7 peut consister en un remplissage d'un métal par un procédé d'électroformage (ou galvanoplastie).

On notera qu'une quantité suffisante du troisième élément 10 est fournie lors de l'incrustation, de manière à remplir intégralement chaque gorge 6, 7 aux niveaux des zones de jonction 9 et de préférence totalement sur le reste des longueurs des gorges 6, 7. Toutefois, des creux dans le remplissage par le troisième élément 10 sur les portions en dehors des zones de jonction 9 peuvent être envisagés, afin de conférer un aspect singulier.

Lors de l'incrustation ou du remplissage par électroformage un surplus du troisième élément 10 se forme au-delà de l'ouverture des gorges 6, 7. Dès lors, une fois le troisième élément 10 introduit, le procédé de l'invention prévoit ensuite une étape consistant à araser ledit troisième élément 10 jusqu'à ce que les surfaces des premier 2, du deuxième 3 et du troisième 10 éléments soient reliées l'une à l'autre sans solution de continuité. De préférence, on arase par meulage ou tournage. Cette étape permet de retirer l'excès de matière du troisième élément 10 jusqu'à venir à affleurement des surfaces des éléments 2, 3, 4. Le troisième élément 10 se retrouve donc parfaitement incorporé au sein des autres éléments 2, 3, 4.

Une étape supplémentaire facultative de polissage des éléments 2, 3, 4,10, afin de lisser les surfaces et, dans le cas d'un assemblage en partie visible, de conférer un aspect esthétique lisse et sans défaut.

Le procédé d'assemblage selon l'invention permet donc d'obtenir un composant 1 d'habillage comprenant au moins un premier élément 2 et un deuxième élément 3 assemblés au travers du procédé d'assemblage tel que précédemment décrit.

Selon tout procédé, l'invention vise aussi un composant 1 d'habillage, comprenant au moins un premier élément 2 et un deuxième élément 3 assemblés au niveau d'au moins une zone de jonction 9. Une première gorge 6 est ménagée dans ledit premier élément 2 et une deuxième gorge 7 est ménagée dans ledit deuxième élément 3, lesdites première gorge 6 et deuxième gorge 7 s'étendant au moins au niveau de chaque zone de jonction 9. Un tel composant 1 comprend aussi une incrustation d'un matériau métallique au moins partiellement amorphe, remplissant au moins partiellement les première gorge 6 et deuxième gorge 7 au niveau de chaque zone de jonction 9 des premiers éléments 2 et deuxième élément 3.

Comme précédemment suggéré, un tel composant 1 peut être constitué de plus de deux éléments 2, 3, avec un ou plusieurs autres éléments 10, ainsi qu'un seul ou plusieurs troisièmes éléments 10 introduit au sein des gorges 6, 7 respectives.

Le composant 1 d'habillage est destiné à être rapporté sur un dispositif portable d'horlogerie, telle une montre. En particulier, le composant d'habillage 1 peut constituer, non limitativement, une lunette de montre. Le composant 1 peut être monté sur la montre, de façon fixe ou mobile, par tout moyen de fixation, notamment par clipsage.

On comprend donc que le composant 1 horloger peut former tout ou partie d'une pièce d'habillage, comme par exemple une lunette de montre, un maillon de bracelet, un cadran, une boite de montre ou un élément de fermoir, ou bien peut former tout ou partie d'un organe du mouvement d'une pièce d'horlogerie. On peut, à titre d'exemple, envisager de former, le balancier, l'ancre, les ponts, la masse oscillante ou même les mobiles comme les roues d'échappement totalement ou partiellement à base de céramique. Il est également envisageable de former un boîtier, un cadran, un affichage, un décor, un index, une applique, un réhaut, une lunette, un poussoir, une couronne, un fond de boîtier, une aiguille ou un bracelet totalement ou partiellement à base de céramique selon l'invention

Bien entendu, la présente invention ne se limite pas à l'exemple illustré mais est susceptible de diverses variantes et modifications qui apparaîtront à l'homme de l'art.

### Légende des figures

- 1: Composant d'habillage
- 2: Premier élément
- 3: Deuxième élément
- 4: Autre élément
- 5: Coque
- 6: Première gorge
- 7: Deuxième gorge
- 8: Parois latérales (de la première gorge et de la deuxième gorge)
- 9: Zones de jonction
- 10: Troisième élément

## Revendications

1. Procédé d'assemblage d'au moins un premier élément (2) et d'un deuxième élément (3) pour former lorsqu'ils sont assemblés un composant d'habillage horloger présentant une forme annulaire pour un dispositif portable et dans lequel les premier et deuxième éléments sont réalisés en un matériau conducteur de l'électricité ou dans lequel les parois des gorges sont revêtues d'une couche conductrice de l'électricité, le procédé comprenant au moins les étapes de :
a) fabriquer le premier élément (2) en un premier matériau constituant un premier arc annulaire ;
b) fabriquer le deuxième élément (3) en un deuxième matériau différent matériau du premier matériau constituant un deuxième arc annulaire;
c) ménager au moins une première gorge (6) dans le premier élément et au moins une deuxième gorge (7) dans le deuxième élément ;
d) abouter et maintenir le premier élément et le deuxième élément au moyen d'au moins un troisième élément de liaison (10) que l'on introduit à blocage dans les première et deuxième gorges, l'introduction à blocage du troisième élément dans les première et deuxième gorges , ledit procédé étant **caractérisé en ce que** ladite opération d'introduction dudit troisième élément consiste en un remplissage des première et deuxième gorges d'un métal par un procédé d'électroformage, la première gorge étant en communication avec la deuxième gorge lorsque les deux éléments sont aboutés.

2. Procédé d'assemblage d'au moins un premier élément (2) et d'un deuxième élément (3) pour former lorsqu'ils sont assemblés un composant d'habillage horloger présentant une forme annulaire pour un dispositif portable, le procédé comprenant au moins les étapes de :
a) fabriquer le premier élément (2) en un premier matériau constituant un premier arc annulaire ;
b) fabriquer le deuxième élément (3) en un deuxième matériau différent matériau du premier matériau;
c) ménager au moins une première gorge (6) dans le premier élément et au moins une deuxième gorge (7) dans le deuxième élément ;
d) abouter et maintenir le premier élément et le deuxième élément au moyen d'au moins un troisième élément de liaison (10) que l'on introduit à blocage dans les première et deuxième gorges, l'introduction à blocage du troisième élément dans les première et deuxième gorges par incrustation d'un matériau métallique au moins partiellement amorphe, ledit procédé étant **caractérisé en ce que** le deuxième élément constitue un deuxième arc annulaire et **en ce que** la première gorge étant en communication avec la deuxième gorge lorsque les deux éléments sont aboutés.

3. Procédé d'assemblage selon l'une des revendications précédentes, **caractérisé en ce que** le premier élément présente un premier aspect et **en ce que** le deuxième élément présente un deuxième aspect différent du premier aspect du premier élément.

4. Procédé d'assemblage selon l'une quelconque des revendications précédentes **caractérisé en ce qu'**il comprend en outre après l'étape d) une étape consistant à araser ledit troisième élément jusqu'à ce que les surfaces des premier, deuxième et troisième éléments soient reliées l'une à l'autre sans solution de continuité.

5. Procédé d'assemblage selon l'une quelconque des revendications précédentes, **caractérisé en ce que** ledit premier matériau et ledit deuxième matériaux sont des matériaux en céramique polycristalline ou monocristalline, à base d'oxyde d'aluminium, d'oxyde de zirconium, de carbure de tungstène, de nitrure de silicium, de carbure de silicium, de carbure de tungstène ou des cermets.

6. Procédé d'assemblage selon l'une quelconque des revendications précédentes, **caractérisé en ce que** ledit matériau formant le troisième élément est choisi parmi l'ensemble : métaux précieux ou semi-précieux.

7. Procédé d'assemblage selon l'une quelconque des revendications précédentes, **caractérisé en ce que** ledit matériau formant le troisième élément est choisi parmi l'ensemble comprenant des alliages d'or, de platine ou de palladium.

8. Procédé d'assemblage selon l'une quelconque des revendications précédentes, **caractérisé en ce que** chaque gorge est usinée pour former creusure présentant section transversale trapézoïdale, les parois latérales de chaque gorge étant inclinées et convergente depuis l'intérieur vers l'extérieur.

9. Procédé d'assemblage selon l'une quelconque des revendications précédentes, **caractérisé en ce que** chaque gorge est usinée soit en face supérieure, soit en face inférieure desdits premier élément et deuxième élément.

10. Procédé d'assemblage selon l'une quelconque des revendications précédentes, **caractérisé en ce que** chaque gorge s'étend sur toute la longueur des premiers éléments et deuxième élément.

11. Procédé d'assemblage selon l'une quelconque des revendications précédentes, **caractérisé en ce que** chaque gorge comporte une profondeur comprise entre 0.05 mm et 4 mm.

12. Procédé d'assemblage selon l'une quelconque des revendications précédentes, **caractérisé en ce qu'**on arase par meulage ou tournage.

13. Procédé d'assemblage selon la revendication 1 ou 2, **caractérisé en ce qu'**on rapporte ledit composant d'habillage sur un dispositif portable d'horlogerie, telle une montre.

14. Composant d'habillage obtenu par le procédé d'assemblage selon l'une quelconque des revendications 1 à 13, comprenant au moins :
- un premier élément (2) constituant un premier arc annulaire et un deuxième élément (3) constituant un deuxième arc annulaire assemblés au niveau d'au moins une zone de jonction (9) pour former ensemble un composant annulaire;
- une première gorge (6) ménagée dans ledit premier élément et une deuxième gorge (7) ménagée dans ledit deuxième élément, lesdites première gorge et deuxième gorge s'étendant au moins au niveau de chaque zone de jonction (9);
- un troisième élément (10), remplissant au moins partiellement les première gorge et deuxième gorge au niveau de chaque zone de jonction des premiers éléments et deuxième élément.

15. Composant d'habillage selon la revendication 14, caractérisé en que ledit troisième élément est un matériau métallique incrusté dans lesdites première et deuxième gorges

16. Composant d'habillage selon la revendication 14 ou 15, caractérisé en que ledit troisième élément est un matériau métallique au moins partiellement amorphe incrusté dans lesdites première et deuxième gorges.

17. Composant d'habillage selon la revendication 14, caractérisé en que ledit troisième élément est un matériau métallique électro-formé dans lesdites première et deuxième gorges.

18. Composant selon l'une des revendications 14 à 17, **caractérisé en ce que** ledit premier matériau et ledit deuxième matériaux sont des matériaux en céramique polycristalline ou monocristalline, à base d'oxyde d'aluminium, d'oxyde de zirconium, de carbure de tungstène, de nitrure de silicium, de carbure de silicium, de carbure de tungstène ou des cermets.

19. Composant selon l'une des revendications 14 à 18, **caractérisé en ce que** ledit matériau formant le troisième élément est choisi parmi l'ensemble : métaux précieux ou semi-précieux.

20. Composant selon la revendication 19, **caractérisé en ce que** ledit matériau formant le troisième élément est choisi parmi l'ensemble comprenant des alliages d'or, de platine ou de palladium.

21. Composant selon l'une des revendications 14 à 20, **caractérisé en ce que** chaque gorge présente une section transversale trapézoïdale, les parois latérales de chaque gorge étant inclinées et convergente depuis l'intérieur vers l'extérieur.

22. Composant selon l'une des revendications 14 à 21, **caractérisé en ce que** chaque gorge s'étend sur toute la longueur des premiers éléments et deuxième élément.

23. Composant selon l'une des revendications 14 à 22, **caractérisé en ce que** chaque gorge comporte une profondeur comprise entre 0.05 mm et 4 mm.

24. Composant d'habillage selon l'une des revendications 14 à 23, **caractérisé en ce qu'**il forme une lunette de montre, un maillon de bracelet, un cadran, une boite de montre ou un élément de fermoir.

## Patentansprüche

1. Verfahren zum Zusammenbauen mindestens eines ersten Elements (2) und eines zweiten Elements (3), um, nachdem sie zusammengebaut sind, eine Uhrausstattungskomponente mit einer ringförmigen Form für eine tragbare Vorrichtung zu bilden, und wobei das erste und das zweite Element aus einem elektrisch leitenden Material hergestellt sind oder wobei die Wände der Nuten mit einer elektrisch leitfähigen Beschichtung beschichtet sind, wobei das Verfahren mindestens die folgenden Schritte umfasst:
a) Herstellen des ersten Elements (2) aus einem ersten Material unter Bildung eines ersten Ringbogens;
b) Herstellen des zweiten Elements (3) aus einem zweiten Material, das sich von dem ersten Material unterscheidet, unter Bildung eines zweiten Ringbogens;
c) Anordnen mindestens einer ersten Nut (6) in dem ersten Element und mindestens einer zweiten Nut (7) in dem zweiten Element;
d) Platzieren und Halten des ersten Elements und des zweiten Elements anliegend aneinander mittels mindestens eines dritten Verbindungselements (10), das in die erste und die zweite Nut eingesetzt und verriegelt wird, wobei das dritte Element in die erste und die zweite Nut eingesetzt und verriegelt wird, wobei das Verfahren **dadurch gekennzeichnet ist, dass** der Vorgang, bei dem das dritte Element eingesetzt wird, aus einem Füllen der ersten und der zweiten Nut mit einem Metall unter Verwendung eines Elektroformverfahrens besteht, wobei die erste Nut mit der zweiten Nut in Verbindung steht, wenn beide Elemente aneinander anliegen.

2. Verfahren zum Zusammenbauen mindestens eines ersten Elements (2) und eines zweiten Elements (3), um, nachdem sie zusammengebaut sind, eine Uhrausstattungskomponente mit einer ringförmigen Form für eine tragbare Vorrichtung zu bilden, wobei das Verfahren mindestens die folgenden Schritte umfasst:
a) Herstellen des ersten Elements (2) aus einem ersten Material unter Bildung eines ersten Ringbogens;
b) Herstellen des zweiten Elements (3) aus einem zweiten Material, das sich von dem ersten Material unterscheidet;
c) Anordnen mindestens einer ersten Nut (6) in dem ersten Element und mindestens einer zweiten Nut (7) in dem zweiten Element;
d) Platzieren und Halten des ersten Elements und des zweiten Elements anliegend aneinander mittels mindestens eines dritten Verbindungselements (10), das in die erste und die zweite Nut eingesetzt und verriegelt wird, wobei das dritte Element durch Einlegen eines zumindest teilweise amorphen metallischen Materials in die erste und die zweite Nut eingesetzt und verriegelt wird, wobei das Verfahren **dadurch gekennzeichnet ist, dass** das zweite Element einen zweiten Ringbogen bildet und dass die erste Nut mit der zweiten Nut in Verbindung steht, wenn beide Elemente aneinander anliegen.

3. Zusammenbauverfahren nach einem der vorhergehenden Ansprüche, **dadurch gekennzeichnet, dass** das erste Element ein erstes Aussehen aufweist und dass das zweite Element ein zweites Aussehen aufweist, das sich von dem ersten Aussehen des ersten Elements unterscheidet.

4. Zusammenbauverfahren nach einem der vorhergehenden Ansprüche, **dadurch gekennzeichnet, dass** es, nach Schritt d), ferner einen Schritt umfasst, der in einem Abgleichen des dritten Elements, bis die Oberflächen des ersten, zweiten und dritten Elements nahtlos miteinander verbunden sind, besteht.

5. Zusammenbauverfahren nach einem der vorhergehenden Ansprüche, **dadurch gekennzeichnet, dass** das erste Material und das zweite Material polykristalline oder monokristalline keramische Materialien sind, die aus Aluminiumoxid, Zirconiumoxid, Wolframcarbid, Siliciumnitrid, Siliciumcarbid, Wolframcarbid oder Cermets hergestellt sind.

6. Zusammenbauverfahren nach einem der vorhergehenden Ansprüche, **dadurch gekennzeichnet, dass** das Material, das das dritte Element bildet, aus der folgenden Gruppe ausgewählt wird: Edel- oder Halbedelmetalle.

7. Zusammenbauverfahren nach einem der vorhergehenden Ansprüche, **dadurch gekennzeichnet, dass** das Material, das das dritte Element bildet, aus der Gruppe ausgewählt wird, die Legierungen von Gold, Platin oder Palladium umfasst.

8. Zusammenbauverfahren nach einem der vorhergehenden Ansprüche, **dadurch gekennzeichnet, dass** jede Nut bearbeitet wird, um eine Vertiefung mit einem trapezförmigen Querschnitt zu bilden, wobei die Seitenwände jeder Nut geneigt sind und von innen nach außen konvergieren.

9. Zusammenbauverfahren nach einem der vorhergehenden Ansprüche, **dadurch gekennzeichnet, dass** jede Nut entweder auf der Oberseite oder auf der Unterseite des ersten Elements und des zweiten Elements bearbeitet wird.

10. Zusammenbauverfahren nach einem der vorhergehenden Ansprüche, **dadurch gekennzeichnet, dass** sich jede Nut über die gesamte Länge des ersten Elements und des zweiten Elements erstreckt.

11. Zusammenbauverfahren nach einem der vorhergehenden Ansprüche, **dadurch gekennzeichnet, dass** jede Nut eine Tiefe zwischen 0,05 mm und 4 mm aufweist.

12. Zusammenbauverfahren nach einem der vorhergehenden Ansprüche, **dadurch gekennzeichnet, dass** das Abgleichen durch Fräsen oder Drehen erreicht wird.

13. Zusammenbauverfahren nach Anspruch 1 oder 2, **dadurch gekennzeichnet, dass** die Ausstattungskomponente auf einer tragbaren Uhrmachervorrichtung, wie einer Uhr, platziert ist.

14. Ausstattungskomponente, hergestellt durch das Zusammenbauverfahren nach einem der Ansprüche 1 bis 13, die mindestens Folgendes umfasst:
- ein erstes Element (2), das einen ersten Ringbogen bildet, und ein zweites Element (3), das einen zweiten Ringbogen bildet, zusammengebaut in mindestens einem Verbindungsbereich (9), um zusammen eine ringförmige Komponente zu bilden;
- eine erste Nut (6), die in dem ersten Element angeordnet ist, und eine zweite Nut (7), die in dem zweiten Element angeordnet ist, wobei sich die erste Nut und die zweite Nut mindestens in jeden Verbindungsbereich (9) erstrecken;
- ein drittes Element (10), das die erste Nut und die zweite Nut in jedem Verbindungsbereich des ersten Elements und des zweiten Elements zumindest teilweise ausfüllt.

15. Ausstattungskomponente nach Anspruch 14, **dadurch gekennzeichnet, dass** das dritte Element ein metallisches Material ist, das in die erste und die zweite Nut eingelegt ist.

16. Ausstattungskomponente nach Anspruch 14 oder 15, **dadurch gekennzeichnet, dass** das dritte Element ein zumindest teilweise amorphes metallisches Material ist, das in die erste und die zweite Nut eingelegt ist.

17. Ausstattungskomponente nach Anspruch 14, **dadurch gekennzeichnet, dass** das dritte Element ein metallisches Material ist, das in der ersten und der zweiten Nut elektrogeformt ist.

18. Komponente nach einem der Ansprüche 14 bis 17, **dadurch gekennzeichnet, dass** das erste Material und das zweite Material polykristalline oder monokristalline keramische Materialien sind, die aus Aluminiumoxid, Zirconiumoxid, Wolframcarbid, Siliciumnitrid, Siliciumcarbid, Wolframcarbid oder Cermets hergestellt sind.

19. Komponente nach einem der Ansprüche 14 bis 18, **dadurch gekennzeichnet, dass** das Material, das das dritte Element bildet, aus der folgenden Gruppe ausgewählt wird: Edel- oder Halbedelmetalle.

20. Komponente nach Anspruch 19, **dadurch gekennzeichnet, dass** das Material, das das dritte Element bildet, aus der Gruppe ausgewählt wird, die Legierungen von Gold, Platin oder Palladium umfasst.

21. Komponente nach einem der Ansprüche 14 bis 20, **dadurch gekennzeichnet, dass** jede Nut einen trapezförmigen Querschnitt aufweist, wobei die Seitenwände jeder Nut geneigt sind und von innen nach außen konvergieren.

22. Komponente nach einem der Ansprüche 14 bis 21, **dadurch gekennzeichnet, dass** sich jede Nut über die gesamte Länge des ersten Elements und des zweiten Elements erstreckt.

23. Komponente nach einem der Ansprüche 14 bis 22, **dadurch gekennzeichnet, dass** jede Nut eine Tiefe zwischen 0,05 mm und 4 mm aufweist.

24. Komponente nach einem der Ansprüche 14 bis 23, **dadurch gekennzeichnet, dass** sie eine Uhrenlünette, ein Armbandglied, ein Zifferblatt, ein Uhrgehäuse oder ein Verschlusselement bildet.

## Claims

1. A method for assembling at least a first element (2) and a second element (3) to form, once they have been assembled, an external horology component with an annular shape for a wearable device and in which the first and second elements are made of an electrically conductive material or in which the walls of the grooves are coated in an electrically conductive coating, the method comprising at least the steps of:
a) making the first element (2) in a first material forming a first annular arc;
b) making the second element (3) in a second material different to the first material, forming a second annular arc;
c) arranging at least a first groove (6) in the first element and at least a second groove (7) in the second element;
d) placing and holding the first element and the second element end-to-end by means of at least a third connecting element (10) which is inserted and locked in the first and second grooves, the third element is inserted and locked in the first and second grooves, said method being **characterised in that** said operation in which said third element is inserted consists of filling the first and second grooves with a metal using an electroforming method, the first groove communicating with the second groove when both elements are end-to-end.

2. A method for assembling at least a first element (2) and a second element (3) to form, once they have been assembled, an external horology component with an annular shape for a wearable device, the method comprising at least the steps of:
a) making the first element (2) in a first material forming a first annular arc;
b) making the second element (3) in a second material different to the first material;
c) arranging at least a first groove (6) in the first element and at least a second groove (7) in the second element;
d) placing and holding the first element and the second element end-to-end by means of at least a third connecting element (10) which is inserted and locked in the first and second grooves, the third element is inserted and locked in the first and second grooves by inlaying an at least partially amorphous metallic material, said method being **characterised in that** the second element forms a second annular arc and **in that** the first groove communicates with the second groove when both elements are end-to-end.

3. The assembly method according to any of the preceding claims, **characterised in that** the first element has a first appearance and **in that** the second element has a second appearance different to the first appearance of the first element.

4. The assembly method according to any of the preceding claims, **characterised in that** it further includes, after step d), a step consisting in trimming said third element until the surfaces of the first, second and third elements are seamlessly connected to one another.

5. The assembly method according to any of the preceding claims, **characterised in that** said first material and said second material are polycrystalline or monocrystalline ceramic materials, made from aluminium oxide, zirconium oxide, tungsten carbide, silicon nitride, silicon carbide, tungsten carbide or cermets.

6. The assembly method according to any of the preceding claims, **characterised in that** said material forming the third element is chosen from the following group: precious or semi-precious metals.

7. The assembly method according to any of the preceding claims, **characterised in that** said material forming the third element is chosen from the group including alloys of gold, platinum or palladium.

8. The assembly method according to any of the preceding claims, **characterised in that** each groove is machined to form a recess with a trapezoidal cross-section, the side walls of each groove being sloped and converging from the inside outwards.

9. The assembly method according to any of the preceding claims, **characterised in that** each groove is machined either on the upper side or on the lower side of said first element and said second element.

10. The assembly method according to any of the preceding claims, **characterised in that** each groove extends over the entire length of the first element and second element.

11. The assembly method according to any of the preceding claims, **characterised in that** each groove has a depth comprised between 0.05 mm and 4 mm.

12. The assembly method according to any of the preceding claims, **characterised in that** trimming is achieved by milling or turning.

13. The assembly method according to claim 1 or 2, **characterised in that** said external component is placed on a wearable horology device, such as a watch.

14. An external component produced by the assembly method according to any of claims 1 to 13 comprising at least:
- a first element (2) forming a first annular arc and a second element (3) forming a second annular arc assembled in at least one junction area (9) to form, together, an annular component;
- a first groove (6) arranged in said first element and a second groove (7) arranged in said second element, said first groove and second groove extending at least into each junction area (9);
- a third element (10), at least partially filling the first groove and second groove in each junction area of the first element and second element.

15. The external component according to claim 14, **characterised in that** said third element is a metallic material inlaid in said first and second grooves.

16. The external component according to claim 14 or 15, **characterised in that** said third element is an at least partially amorphous metallic material inlaid in said first and second grooves.

17. The external component according to claim 14, **characterised in that** said third element is a metallic material electroformed in said first and second grooves.

18. The component according to any of claims 14 to 17, **characterised in that** said first material and said second material are polycrystalline or monocrystalline ceramic materials, made from aluminium oxide, zirconium oxide, tungsten carbide, silicon nitride, silicon carbide, tungsten carbide or cermets.

19. The component according to any of claims 14 to 18, **characterised in that** said material forming the third element is chosen from the following group: precious or semi-precious metals.

20. The component according to claim 19, **characterised in that** said material forming the third element is chosen from the group including alloys of gold, platinum or palladium.

21. The component according to any of claims 14 to 20, **characterised in that** each groove has a trapezoidal cross-section, the side walls of each groove being sloped and converging from the inside outwards.

22. The component according to any of claims 14 to 21, **characterised in that** each groove extends over the entire length of the first element and second element.

23. The component according to any of claims 14 to 22, **characterised in that** each groove has a depth comprised between 0.05 mm and 4 mm.

24. The component according to any of claims 14 to 23, **characterised in that** it forms a watch bezel, a bracelet link, a dial, a watch case or a clasp part.
